# EUROPEAN PATENT SPECIFICATION

(11) **EP 2 883 925 B1**
(45) Date of publication and mention of the grant of the patent: **05.10.2016**
(21) Application number: 13382503.4
(22) Date of filing: 12.12.2013
(51) Int. Cl.: C09J 123/10, C08L 51/06

(54) **Polypropylene based composition**
Polypropylen basierte Mischung
Composition à base de polypropylène

(43) Date of publication of application: 17.06.2015
(73) Proprietor: Repsol, S.A., 28045 Madrid (ES)
(72) Inventor: Segura, Sonia, 29835 MÓSTOLES (ES); Paris, Rodrigo, 29835 MÓSTOLES (ES); Alonso, Victoria, 29835 MÓSTOLES (ES); Jakubec, Tomas, 65649 BRNO (CZ)
(74) Representative: ZBM Patents - Zea, Barlocci & Markvardsen

(56) References cited:
- EP-A1- 0 603 906
- EP-A2- 0 243 206
- EP-A2- 0 370 793
- CN-A- 101 245 228

## Description

The present invention relates to compositions comprising a grafted polypropylene homo- or copolymer based resin as main component; a polypropylene homo- or copolymer and an ethylene copolymer based component, to articles comprising the compositions, as well as to their preparation processes and use as adhesive.

### BACKGROUND ART

Polyolefin based adhesive compositions are widely used in the art. Thus, polyolefin based adhesive compositions can be used as tie-layer adhesives in multi-layer articles, such as multi-layer barrier films and multi-layer polyolefin/metal structures as foils or pipes.

Polyolefin based adhesives typically comprises a polyolefin base resin, which is the main component, and a grafted polyolefin, wherein the grafted polyolefin is produced by reacting a polyolefin with an unsaturated monomer at elevated temperatures. It is also known that the bonding strength and/or compatibility may be improved by adding an ethylene-based elastomeric component.

On the other hand, it is known that crystallization of semi-crystalline polymers is a two-step process consisting of crystal nucleation and crystal growth. Nucleating agents, including clarifying agents, have traditionally been added to semi-crystalline polymers to enhance processing and end product characteristics. Their addition also results in the formation of smaller spherulites in semi-crystalline polymers. This change in spherulite size improves mechanical properties (such as tensile strength, hardness and modulus) and optical properties (such as haze and light transmission. Nevertheless, modifiers introduced in the adhesive compositions in order to improve clarity often reduce adhesion, and vice versa.

In WO2007/030172 it is disclosed a tie-layer adhesive composition comprising an adhesive blend comprising 70-99.5 wt % polyethylene homopolymer or copolymer base resin, and 0.5-30 wt % modified polyolefin having ethylenically unsaturated carboxylic acid or acid derivative functionality grafted to the polymer backbone, and a bicyclic dicarboxylate salt modifier. It is mentioned that with the adhesive composition therein disclosed, it is possible to significantly reduce interfacial clarity distortion in multi-layer coextruded barrier film constructions, which can be acccomplished with little or no reduction in adhesion.

In WO2012/068576 it is disclosed a hot-melt adhesive composition comprising a polymer component which contains in polymerized form at least 65 wt% of a polypropylene polymer, at least one nucleator, and at least one functionalized wax. The functionalized wax is a maleic anhydride grafted polypropylene. The polymer component can be a polymer blend which comprises at least one semi-crystalline polypropylene polymer and at least one elastomeric rubber. The holt-melt adhesive compositions have high heat resistance and fast set-time.

In US4727120 it is disclosed that it is possible to increase the adhesive properties of grafted polypropylene by adding to them a compound bearing at least two groups, which may be identical and which are reactive with the acid anhydride group grafted to the polypropylene. All the compositions described in the examples comprises polypropylene grafted with maleic anhydride (PP-g-MAH) alone or diluted in a higher amount of random polypropylene. Nevertheless, nothing is mentioned about the presence of nucleating agents, nor it is disclosed or suggested about the use of a nucleating agent as promoter of the adhesive properties of PP-g-MAH based resins (i.e. wherein the major component of the adhesive composition is the PP-g-MAH).

In EP603906 it is described a polyolefin composition for coating metal articles wherein a grafted polypropylene is present as a minor component. Particularly, the polyolefin composition therein disclosed comprises: A) from 50-85% of polypropylene, or a propylene/ethylene crystralline random copolymer, or ethylene/propylene/C₄-C₁₀ alpha-olefin crystalline random copolymer; B) from 5-70% of an ethylene/propylene elastomeric copolymer or ethylene/1-butene elastomeric copolymer; C) 2-4% of a polypropylene modified with polar groups in a quantity ranging from 0.5-10%; D) 0-0.5% of a nucleating agent; and E) from 0-10% of TiO₂; said composition having particular melt index and particle size distribution. No examples of compositions with component D) are disclosed, nor additional information regarding to its effect in the composition is mentioned in the specification.

Thus, from what it is known in the art, there is still a need for new compositions based on grafted polypropylene homo- or copolymer suitable for use in making multi-layer structures with improved adhesion properties, high clarity and proper mechanical properties.

### SUMMARY OF THE INVENTION

Inventors have found that polypropylene grafted based compositions (i.e. their main component is a grafted polypropylene homo- or copolymer), wherein ethylene copolymer-based component and polypropylene homo- or copolymers are also present in minor concentration referring to the total of the composition, shows an improvement of its adhesive properties by the addition of at least one nucleating agent (also referred in the present invention as a nucleator) i.e. the nucleating agent acts as promoter of the adhesion.

An aspect of the present invention relates to compositions comprising a modified polypropylene homo- or copolymer grafted with a carboxylic acid, a carboxylic acid derivative, or mixtures thereof; a polypropylene homo- or copolymer; an ethylene copolymer based component selected from a random copolymer of ethylene with one or more polar monomers, and an ethylene-based elastomeric compound; and at least one nucleator, wherein the grafted polypropylene copolymer is present as the main component of the composition (i.e. the concentration of the grafted polypropylene copolymer is the higher concentration versus the concentration of the other components).

The composition shows improved adhesion properties, and proper mechanical characteristics.

In particular, the invention provides compositions comprising:
a) from 45 to 90 weight percent, based on the total weight of the composition, of a modified polypropylene homo- or copolymer grafted with between 0.05 to 2 weight percent of a unsatured carboxylic acid, a carboxylic acid derivative, or mixtures thereof, based on the total weight of the grafted polypropylene;
b) from 5 to 35 weight percent of a polypropylene homo- copolymer, based on the total weight of the composition;
c) from 3 to 40 weight percent, based on the total weight of the composition, of an ethylene copolymer based component selected from
   i) a random copolymer of ethylene with one or more polar monomers, and
   ii) an ethylene-based elastomeric compound; and
d) from 0.05 to 1.5 weight percent of at least one nucleator, based on the total weight of the composition;
the sum of the percentages of all the components of the composition being equal to 100 % w/w.

The above composition shows an adhesive strength measured by a T-peel test according with ISO 11339:2010(T) by measuring the peel force of a T-shaped bonded assembly of two flexible adherends of aluminium, comprised from 30 and 150 N/cm, preferably from 35 and 140 N/cm, more preferably from 40 and 135 N/cm. even more preferably from 45 and 110 N/cm. The above composition is also characterized by a melt flow index (MFI) (230 °C/2.16 kg) comprised from 0.5 g/10 min. to 12 g/10 min., preferably 1.0 g/10 min. to 10 g/10 min., more preferably 2 g/10 min. to 8 g/10 min.;

Alternatively, the above composition can be defined by its preparation method which comprises melt blending the components a), b), c) and d) by conventional means. Mixing the components in a extruder (single or twin-screw extruder) is especially convenient, although any other conventional compounded or blending apparatus can be used. Thus, in accordance with an aspect, the invention provides a process for the preparation of the adhesive composition as defined above, the process comprising the step of mixture of the components in a extruder.

Blends produced in this manner can be pelletized or stored for subsequent use or the melt blends may be directly extruded or coextruded, injected or coinjected

The compositions in accordance with the invention are useful as general purpose as adhesive compositions to bond a variety of substrates. For example, they can be used to bond polyolefins; wood, glass, paper, composite materials, metals, including metal oxides and alloys; barrier resin layers, including ethylene-vinyl alcohol and polyamides; and epoxy resins. Therefore, it is within the scope of the present invention the use of the composition as defined herein as adhesive.

In another aspect of the invention, it is provided a multi-layer barrier article comprising:
i) at least one barrier resin layer; and
ii) at least one tie-layer adhesively bonded to the first layer, the at least one tie-layer comprising the composition as defined above.

The present invention also encompasses a process for the preparation of the multi-layer barrier article as defined above. The multilayer barrier article can be prepared using methods known in the art, such as extrusion methods. Specifically, the multilayer film may be extruded as individual films, and contacted to each other to form a multilayer film. Alternatively, the multilayer film may be prepared by a coextrusion process wherein at least three single-screw extruders are used,each containing the composition of the different layers (e.g. polypropylene, the adhesive composition, EVOH)
Another aspect of the present invention relates to a multi-layer structure comprising:
a. a metal substrate; and
b. the composition as defined herein.

Illustrative examples of multi-layer metal-containing constructions according to the present invention are those comprising
Metal/Epoxy resin/Adhesive composition/Polyolefin
Polyolefin/Adhesive composition/Epoxy resin/Metal/Epoxy
resin/Adhesive Composition/Polyolefin
Metal/Adhesive composition/Polyolefin
Polyolefin/Adhesive/Metal/Adhesive/Polyolefin

It is also provided a process for the preparation of the multi-layer structure as defined above comprising
a. preparing the composition as defined as defined herein in accordance with the method described above;
b. applying said composition on the metal substrate, or if a intermediate layer of epoxy resin is present, applying the adhesive composition on the epoxy resin coated metal substrate.

In accordance with a particular embodiment, step (b) of the above mentioned process, the formed adhesive composition is applied on a metal substrate by extruding said adhesive composition onto the metal substrate. The temperatures and pressures used in the operation of the extruder are known in the art. Typically the temperature may be selected from the range of 180 °C to 280 °C, preferably from the range of 200 °C to 250 °C. The adhesive composition is passed through the extruder on the metal substrate at a processing speed of 300 m/min to 3000 m/min. Preferably, the adhesive compositions passed through the extruder on the metal substrate at a processing speed of 500 m/min to 2000 m/min and more preferably at a processing speed of 600 m/min to 1800 m/min.

It is also within the scope of the present invention the use of at least one nucleating agent as promoter of the adhesion in adhesive compositions based on polypropylene grafted with a carboxylic acid or a carboxylic acid derivative. And in particular the use of at least one nucleating agent as promoter of the adhesion in adhesive composition comprising:
a) from 45 to 90 weight percent, based on the total weight of the composition, of a modified polypropylene homo- or copolymer, grafted with between 0.05 to 2 weight percent, based on the total weight of grafted polypropylene, of a unsatured carboxylic acid, a carboxylic acid derivative, or mixtures thereof;
b) from 5 to 35 weight percent, based on the total weight of the composition, of a polypropylene homo- or copolymer;
c) from 3 to 40 weight percent, based on the total weight of the composition, of an ethylene copolymer based component selected from
   i) a random copolymer of ethylene with one or more polar monomers, and
   ii) an ethylene-based elastomeric compound;
wherein the nucleating agent is present at a concentration from 0.05 to 1.5 weight percent based on the total weight of adhesive compositon; the sum of the percentages of all the components of the composition being equal to 100 % w/w.

### DETAILED DESCRIPTION OF THE INVENTION

As mentioned above, the compositions of the present invention are polypropylene grafted based compositions, i.e. their main component is a grafted polypropylene homo- or copolymer, wherein ethylene copolymer-based component and polypropylene homo- or copolymers are also present in minor concentration referring to the total of the composition. The compositions of the present invention shows an improvement of its adhesive properties due to the presence of at least one nucleating agent (also referred in the present invention as a nucleator) which acts as promoter of the adhesion.

In the context of the present invention, the terms modified and grafted are used interchangeably. Additionally, herein the terms heterophasic copolymer and block copolymer are used interchangeably.

In the context of the present invention, unless stated on the contrary, the term "weight percent" (also referred as "wt%") when referring to the content of components a), b), c) or d) is based on the total weight of the composition; when referring to the content of the grafting monomers of component a), is based on the total weight of grafted polypropylene; when referring to the ethylene content of the polypropylene copolymer (random or block) is based on the total weight of polypropylene copolymer component a) or b).

According to a particular embodiment of the present invention, the composition comprises
a) from 45 to 90 weight percent, preferably from 45 to 80 weight percent, more preferably from 50 to 75 weight percent, even more preferably 50 to 65 weight percent, based on the total weight of the composition, of a modified polypropylene copolymer (random or block copolymer); grafted with between 0.05 to 2 weight percent, preferably from 0.1 to 1.8 weight percent, more preferably from 0.15 to 1.5 weight percent, even more preferably from 0.2 to 0.5 weight percent, based on the total weight of grafted polypropylene, of a carboxylic acid, a carboxylic acid derivative, or mixtures thereof;
b) from 5 to 35 weight percent, preferably from 10 to 34 weight percent, more preferably from 15 to 30 weight percent, even more preferably from 20 to 29 weight percent, and particularly preferred from 22 to 28, based on the total weight of the composition, of the polypropylene homo- or copolymer;
c) from 3 to 40 weight percent, preferably from 10 to 25 weight percent, more preferably from 12 to 18 weight percent, even more preferably from 15 to 16 weight percent, based on the total weight of the composition, of an ethylene copolymer based component selected from
   i) a random copolymer of ethylene with one or more polar monomers, and
   ii) an ethylene-based elastomeric compound; and
d) from 0.05 to 1.5 weight percent, preferably from 0.10 to 1.0 weight percent, more preferably from 0.12 to 0.6 weight percent, even more preferably from 0.15 to 0.5 weight percent, being particularly preferred from 0.16 to 0.4 weight percent based on the total weight of the composition, of the at least one nucleator;
the sum of the percentages of all the components of the composition being equal to 100 % w/w.

In accordance with another particular embodiment of the present invention, the composition comprises
a) from 45 to 90 weight percent, preferably from 45 to 80 weight percent, more preferably from 50 to 75 weight percent, even more preferably 50 to 65 weight percent, based on the total weight of the composition, of a modified polypropylene random copolymer, comprising between 0.1 to 9 weight percent, preferably from 0.5 to 7 weight percent, more preferably from 2 to 5 weight percent, even more preferably form 3.5-4.5 weight percent of ethylene, based on the total weight of grafted polypropylene; grafted with between 0.05 to 2 weight percent, preferably from 0.1 to 1.8 weight percent, more preferably from 0.15 to 1.5 weight percent, even more preferably from 0.2 to 0.5 weight percent, based on the total weight of grafted polypropylene, of a carboxylic acid, a carboxylic acid derivative, or mixtures thereof;
b) from 5 to 35 weight percent, preferably from 10 to 34 weight percent, more preferably from 15 to 30 weight percent, even more preferably from 20 to 29 weight percent, particularly preferred from 22 to 28 weight percent based on the total weight of the composition, of the polypropylene homo- or copolymer;
c) from 3 to 40 weight percent, preferably from 10 to 25 weight percent, more preferably from 12 to 18 weight percent, even more preferably from 15 to 16 weight percent, based on the total weight of the composition, of an ethylene copolymer based component selected from
   i) a random copolymer of ethylene with one or more polar monomers, and
   ii) an ethylene-based elastomeric compound; and
d) from 0.05 to 1.5 weight percent, preferably from 0.10 to 1.0 weight percent, more preferably from 0.12 to 0.6 weight percent, even more preferably from 0.15 to 0.5 weight percent, being particularly preferred from 0.16 to 0.4 weight percent, based on the total weight of the composition, of the at least one nucleator;
the sum of the percentages of all the components of the composition being equal to 100 % w/w.

In another particular embodiment, the composition comprises
a) from 45 to 80 weight percent, based on the total weight of the composition, of a modified random polypropylene copolymer, comprising between 0.5 to 7 weight percent of ethylene, based on the total weight of grafted polypropylene , grafted with between 0.1 to 1.8 weight percent, based on the total weight of grafted polypropylene, of a carboxylic acid, a carboxylic acid derivative, or mixtures thereof;
b) from 15 to 30 weight percent, based on the total weight of the composition, of the polypropylene homo- or copolymer;
c) from 10 to 25 weight percent, based on the total weight of the composition, of an ethylene copolymer based component selected from
   i) a random copolymer of ethylene with one or more polar monomers, and
   ii) an ethylene-based elastomeric compound; and
d) from 0.10 to 1.0 weight percent, based on the total weight of the composition, of the at least one nucleator;
   the sum of the percentages of all the components of the composition being equal to 100 % w/w.

In another example of a particular embodiment of the present invention, the composition comprises
a) from 50 to 75 weight percent, based on the total weight of the composition, of a modified random polypropylene copolymer, comprising between 2 to 5 weight percent of ethylene, based on the total weight of grafted polypropylene, grafted with between 0.15 to 1.5 weight percent, based on the total weight of grafted polypropylene, of a carboxylic acid, a carboxylic acid derivative, or mixtures thereof;
b) from 20 to 29 weight percent, based on the total weight of the composition, of the polypropylene homo- or copolymer;
c) from 12 to 18 weight percent, based on the total weight of the composition, of an ethylene copolymer based component selected from
   i) a random copolymer of ethylene with one or more polar monomers, and
   ii) an ethylene-based elastomeric compound; and
d) from 0.12 to 0.6 weight percent, based on the total weight of the composition, of the at least one nucleator;
   the sum of the percentages of all the components of the composition being equal to 100 % w/w.

In a preferred embodiment, the composition comprises
a) from 50 to 65 weight percent, based on the total weight of the composition, of a modified random polypropylene copolymer, comprising between 3.5 to 4.5 weight percent of ethylene, based on the total weight of grafted polypropylene, grafted with between 0.2 to 0.5 weight percent, based on the total weight of grafted polypropylene, of a carboxylic acid, a carboxylic acid derivative, or mixtures thereof;
b) from 22 to 28 weight percent, based on the total weight of the composition, of the polypropylene homo- or copolymer;
c) from 15 to 16 weight percent, based on the total weight of the composition, of an ethylene copolymer based component selected from
   i) a random copolymer of ethylene with one or more polar monomers, and
   ii) an ethylene-based elastomeric compound; and
d) from 0.15 to 0.5 weight percent, based on the total weight of the composition, of the at least one nucleator;
   the sum of the percentages of all the components of the composition being equal to 100 % w/w.

In another embodiment of the present invention, the composition comprises
a) from 45 to 80 weight percent, preferably from 50 to 75 weight percent, even more preferably 50 to 65 weight percent, based on the total weight of the composition, of a modified polypropylene block copolymer, comprising between 0.1 to 30 weight percent, preferably from 0.3 to 15 weight percent, more preferably from 0.5 to 10 weight percent of ethylene, based on the total weight of grafted polypropylene; grafted with between 0.05 to 2 weight percent, preferably from 0.1 to 1.8 weight percent, more preferably from 0.15 to 1.5 weight percent, even more preferably from 0.2 to 0.5 weight percent, based on the total weight of grafted polypropylene, of a carboxylic acid, a carboxylic acid derivative, or mixtures thereof;
b) from 10 to 34 weight percent, preferably from 15 to 30 weight percent, more preferably from 20 to 29 weight percent, even more preferably from 22 to 28 weight percent, based on the total weight of the composition, of the polypropylene homo- or copolymer;
c) from 3 to 40 weight percent, preferably from 10 to 25 weight percent, more preferably from 12 to 18 weight percent, even more preferably from 15 to 16 weight percent, based on the total weight of the composition, of an ethylene copolymer based component selected from
   i) a random copolymer of ethylene with one or more polar monomers, and
   ii) an ethylene-based elastomeric compound; and
d) from 0.05 to 1.5 weight percent, preferably from 0.10 to 1.0 weight percent, more preferably from 0.12 to 0.6 weight percent, even more preferably from 0.15 to 0.5 weight percent, being particularly preferred from 0.16 to 0.4 weight percent, based on the total weight of the composition, of the at least one nucleator;
   the sum of the percentages of all the components of the composition being equal to 100 % w/w.

In another example of a particular embodiment of the present invention, the composition comprises:
a) from 45 to 80 weight percent, based on the total weight of the composition, of a modified polypropylene block copolymer, comprising between 0.3 to 15 weight percent of ethylene, based on the total weight of grafted polypropylene; grafted with between 0.1 to 1.8 weight percent, based on the total weight of grafted polypropylene, of a carboxylic acid, a carboxylic acid derivative, or mixtures thereof;
b) from 15 to 30 weight percent, based on the total weight of the composition, of the polypropylene homo- or copolymer;
c) from 10 to 25 weight percent, based on the total weight of the composition, of an ethylene copolymer based component selected from
   i) a random copolymer of ethylene with one or more polar monomers, and
   ii) an ethylene-based elastomeric compound; and
d) from 0.10 to 1.0 weight percent, based on the total weight of the composition, of the at least one nucleator;
   the sum of the percentages of all the components of the composition being equal to 100 % w/w.

According to another particular embodiment of the present invention, the composition comprises
a) from 45 to 80 weight percent, preferably from 45 to 80 weight percent, more preferably from 50 to 75 weight percent, even more preferably 50 to 65 weight percent, based on the total weight of the composition, of a modified polypropylene homopolymer; grafted with between 0.05 to 2 weight percent, preferably from 0.1 to 1.8 weight percent, more preferably from 0.15 to 1.5 weight percent, even more preferably from 0.2 to 0.5 weight percent, based on the total weight of grafted polypropylene, of a carboxylic acid, a carboxylic acid derivative, or mixtures thereof;
b) from 10 to 34 weight percent, preferably from 15 to 30 weight percent, more preferably from 20 to 29 weight percent, even more preferably from 22 to 28 weight percent, based on the total weight of the composition, of the polypropylene homo- or copolymer;
c) from 3 to 40 weight percent, preferably from 10 to 25 weight percent, more preferably from 12 to 18 weight percent, even more preferably from 15 to 16 weight percent, based on the total weight of the composition, of an ethylene copolymer based component selected from
   i) a random copolymer of ethylene with one or more polar monomers, and
   ii) an ethylene-based elastomeric compound; and
d) from 0.05 to 1.5 weight percent, preferably from 0.10 to 1.0 weight percent, more preferably from 0.12 to 0.6 weight percent, even more preferably from 0.15 to 0.5 weight percent, being particularly preferred from 0.16 to 0.4 weight percent, based on the total weight of the composition, of the at least one nucleator;
   the sum of the percentages of all the components of the composition being equal to 100 % w/w.

It has been found that the compositions disclosed herein provide an improvement in the adhesion in multi-layer structures, such as multi-layer barrier films and multi-layer structures comprising a metal substrate.

In accordance with a particular embodiment, the adhesive composition is suitable for making multi-layer barrier films having at least two layers in addition to the adhesive layer, which bonds the other layers together. Usually, at least one layer shows barrier properties. Additionally, the adhesive composition of the invention can be used in multi-layer barrier films constructions having five, seven, nine or more layers, having at least one layer with barrier properties. Multi-layer barrier films are tipically used for food packaging.

Unlike what happens with the compositions of the present invention, the presence of the nucleator in compositions based on polypropylene homopolymers containing a minor amount of modified random polypropylene copolymer does not result in an improvement of the adhesive properties of the composition in multi-layer structures.

The polypropylene homo- or copolymers (both, the polypropylene of component a) and the polypropylene of component b)) of the compositon can be a polypropylene homopolymer or a polypropylene copolymer, in the later case the polypropylene copolymer can be a random or block polypropylene copolymer.

Preferred random and block polypropylene copolymers are those wherein the comonomers are ethylene, 1-butene, 1-hexene, 1-octene and mixtures thereof.

Examples of preferred polypropylene homo- or copolymers for component a) are:
i) polypropylene homopolymers having a MFI (230 °C/2.16 kg) comprised from 0.1 g/10 min. to 10 g/10 min., preferably 0.3 g/10 min. to 5 g/10 min., more preferably 1 g/10 min. to 3 g/10 min.;
ii) polypropylene random copolymers, having an ethylene content comprised from 0.1 to 9 weight percent, preferably from 0.5 to 7 weight percent, more preferably from 2 to 5 weight percent, and even more preferably form 3.5 to 4.5 weight percent, based on the total weight of grafted polypropylene;
iii) polypropylene block copolymers, having an ethylene content comprised from 0.1 to 30 weight percent, preferably from 0.3 to 15 weight percent, more preferably from 0.5 to 10 weight percent, based on the total weight of grafted polypropylene.

In a particularly preferred embodiment, the polypropylene polymer of component a) is a polypropylene random copolymer having an ethylene content comprised from 0.1 to 9 weight percent, preferably from 0.5 to 7 weight percent, more preferably from 2 to 5 weight percent, and even more preferably form 3.5 to 4.5 weight percent, based on the total weight of grafted polypropylene.

Random polypropylene copolymers used in component a) before its modification in accordance with the present invention have a MFI (230 °C/2.16 kg) comprised of from 0.1 g/10 min. to 30 g/10 min.; preferably from 0.5 g/10 min. to 20 g/10 min.; particularly preferred from 2 g/10 min. to 12 g/10 min. Once the random polypropylene copolymer of component a) has been modified (grafted) it has a MFI (230 °C/2.16 kg) comprised of from 0.5 g/10 min. to 30 g/10 min.; preferably from 1.0 g/10 min. to 25 g/10 min.; particularly preferred from 3 g/10 min. to 11 g/10 min.; even more preferred from 5 g/10 min. to 9 g/10 min.

In the case of polypropylene block copolymers used in component a) before its modification, they have a MFI (230 °C/2.16 kg) comprised from 0.1 g/10 min. to 30 g/10 min.; preferably from 0.2 g/10 min. to 15 g/10 min.; particularly preferred from 0.3 g/10 min. to 5 g/10 min. Once the block polypropylene copolymer of component a) has been modified (grafted) it has a MFI (230 °C/2.16 kg) comprised of from 0.5 g/10 min. to 20 g/10 min.; preferably from 1 g/10 min. to 15 g/10 min.; particularly preferred from 4 g/10 min. to 8 g/10 min.

When a polypropylene homopolymer is used in component a), it has a MFI (230 °C/2.16 kg) before its modification (grafting) comprised of from 0.1 g/10 min. to 10 g/10 min., preferably 0.3 g/10 min. to 5 g/10 min.,more preferably 1 g/10 min. to 3 g/10 min. Once the polypropylene homopolymer of component a) has been grafted it has a MFI (230 °C/2.16 kg) comprised of from 0.5 g/10 min. to 20 g/10 min.; preferably from 1 g/10 min. to 10 g/10 min.; particularly preferred from 2 g/10 min. to 6 g/10 min.; even more preferred from 3 g/10 min. to 5 g/10 min.

Examples of derivatives of unsaturated carboxylic acid include acid halide compounds, amide compounds, imide compounds, acid anhydrides and ester compounds of the above-mentioned unsaturated carboxylic acids.

Specific examples of unsatured carboxylic acids and carboxylic acid derivatives used as grafting monomers include compounds such as acrylic acid, methacrylic acid, maleic acid, malenyl chloride, maleimide, fumaric acid, maleic anhydride, 4-methyl cyclohex-4-ene-1,2-dicarboxylic acid or anhydride, bicyclo(2.2.2)oct-5-ene-2,3-dicarboxylic acid or anhydride, bicyclo(2.2.1)oct-5-ene-2,3-dicarboxylic acid or anhydride, tetrahydrophthalic acid or anhydride, methylbicyclo(2.2.1) hept-5-ene-2,3-dicarboxylic acid or anhydride, itaconic acid, itraconic anhidride, citraconic acid, citraconic anhydride, manomethyl maleate, dimethyl maleate, glycidyl maleate, butenoic acid, isobitenic acid, hexenic acid, sorbic acid, and the like. Maleic acid and maleic anhydride are particularly preferred as grafting monomers. The polypropylene homo- or copolymer can be grafted with one or a mixture of unsatured carboxylic acids and/or carboxylic acid derivatives.

In accordance with a preferred embodiment, the amount of the carboxylic acid or derivative in the composition is comprised from 0.05 to 2.0 weight percent, preferably from 0.1 to 1.8 weight percent, more preferably from 0.15 to 1.5 weight percent, even more preferably from 0.2 to 0.5 weight percent, based on the total weight of the grafted polypropylene.

In a preferred embodiment, the carboxylic acid or derivative used as grafting monomer is maleic anhydride (MAH); preferably the MAH is used in an amount within the range of 0.1 to 0.5 weight percent, preferably from 0.2 to 0.3 weight percent, based on the total weight of the grafted polypropylene.

Grafting can be accomplished following known procedures, such as heating the mixture of polypropylene and the carboxylic acid or derivative. In an embodiment of the present invention, the grafted polyproylene is prepared by melt blending the polypropylene with the carboxylic acid or derivative in a single or twin screw extruder in presence of a radical iniciator (e.g. organic peroxide or azo compound).

In a particular embodiment of the invention the modified random polypropylene copolymer of component a) is a random polypropylene copolymer, comprising between 0.5 to 7 weight percent of ethylene, based on the total weight of grafted polypropylene, grafted with between 0.1 to 0.5 weight percent, based on the total weight of grafted polypropylene, of maleic acid or maleic anhydride.

Alternatively, in another particular embodiment the modified random polypropylene copolymer of component a) is a random polypropylene copolymer, comprising between 3.5 to 4.5 weight percent, based on the total weight of grafted polypropylene, of ethylene, grafted with between 0.2 to 0.3 weight percent, based on the total weight of grafted polypropylene, of maleic acid or maleic anhydride

Examples of preferred polypropylene homo- or copolymers for component b) are:
i) polypropylene homopolymers having a MFI (230 °C/2.16 kg) comprised of from 1 g/10 min. to 20 g/10 min., preferably 2 g/10 min. to 10 g/10 min.,more preferably 3 g/10 min. to 8 g/10 min.;
ii) polypropylene random copolymers, having a comonomer content, based on the total weight of the polypropylene copolymer b), comprised of from 0.1 to 9 weight percent, preferably from 0.5 to 7 weight percent, more preferably form 2 to 5 weight percent, and even more preferably from 3.5 to 4.5 weight percent;
iii) polypropylene block copolymers, having a comonomer content, based on the total weight of the polypropylene copolymer b), comprised of from 0.1 to 30 weight percent, preferably from 0.2 to 12 weight percent, more preferably from 0.3 to 10 weight percent.

In a particularly preferred embodiment, the polypropylene polymer of component b) is a polypropylene random or block copolymer as described above. More preferably a block copolymer.

Preferably, random polypropylene copolymers used in component b) have a MFI (230 °C/2.16 kg) comprised of from 0.1 g/10 min. to 30 g/10 min.; more preferably from 0.5 g/10 min. to 20 g/10 min.; particularly preferred from 2 g/10 min. to 12g/10 min.

In the case of polypropylene block copolymers used in component b), they preferably have a MFI (230 °C/2.16 kg) comprised from 0.2 g/10 min. to 30 g/10 min.; preferably from 0.25 g/10 min. to 15 g/10 min.; particularly preferred from 0.3 g/10 min. to 7 g/10 min.

As used herein the term "elastomer" or "elastomeric compound" refers to polymers that displays rubber-like elasticity.

In accordance with a particular embodiment of the present invention, the ethylene copolymer based component c) present in the adhesive compositions of the invention, is selected from a random copolymer of ethylene with one or more polar monomers, and an ethylene based elastomeric compound.

Examples of preferred random copolymers of ethylene with one or more polar monomers are ethylene-(C₂-C₅)alkylacrylates, ethylene-(C₂-C₅)alkyl methacrylate and ethylenevinylacetates. Ethylenevinylacetate copolymers will generally contain from 8 to 60 weight percent vinyl acetate and, more preferably from 10 to 50 weight percent vinyl acetate. Ethylene-(C₂-C₅)alkylacrylates copolymers will generally have from 1 to 50 weight percent and, more preferably, from 5 to 40 weight percent alkyl acrylate copolymerized. Particularly preferred are ethylenevinylacetate (EVA) copolymer, ethylenemethylacrylate (EMA) copolymer, ethylenemethylmethacrylate (EMMA) copolymer, ethyleneethylacrylate (EEA) copolymer, ethylenepropylacrylate copolymer and ethylenebutylacrylate (EBA) copolymer.

In accordance with a particular embodiment, the copolymer of ethylene with one or more polar monomers is a EBA having a butylacrylate content from 17 to 35 weight percent and MFI from 0.6 to 25 g/10 min. In accordance with a particular embodiment, the ethylenealkylacrylates or ethylenevinylacetate contains from 60 to 98 weight percent of ethylene.

In accordance with another preferred embodiment, the ethylene copolymer based component c) present in the adhesive compositions of the invention is an ethylene-based elastomeric compound. Ethylene-based elastomeric compounds such as ethylene-propylene rubber (EPR), ethylene-propylene-diene monomer rubber (EPDM) and styrene-ethylene-butylene-styrene (SEBS) block copolymer are particularly preferred.

In accordance with a preferred embodiment the ethylene-based elastomeric compound is a EPR having an ethylene content comprised from 10 to 35 weight percent and a propylene content comprised from 90 to 65 weight percent; preferably an ethylene content comprised from 20 to 30 weight percent, and a propylene content comprised from 80 to 70 weight percent.

Other elastomeric compounds which may be used as component c) in the adhesive composition are acrylonitrile, polychloroprene, polyacrylate rubber, polyurethane, chlorinated polyethylene, polyester, poly(isobutylene), copolymers of isobutylene and isoprene, chlorinated copolymers of isobutylene and isoprene, copolymers of butadiene and styrene, copolymers of isoprene and styrene, block copolymers of butadiene and styrene, block copolymers of isoprene and styrene, block copolymers of isoprene and vinyl toluene, hydrogenated copolymers of butadiene and styrene, hydrogenated block copolymers of isoprene and styrene, copolymers of acrylonitrile and butadiene, copolymers of methacrylonitrile and butadiene, copolymers of acrylonitrile and isoprene, and copolymers of methylacrylonitrile and isoprene.

In accordance with an embodiment of the present invention, component c) is present in the adhesive composition at a concentration from 3 to 40 weight percent, preferably from 10 to 25 weight percent, more preferably from 12 to 18 weight percent, being particularly preferred from 15 to 16 weight percent, based on the total weight of the composition.

Nucleating agents (component d)) suitable for use in making the adhesive compositions of the present invention can be any suitable nucleating and/or clarifying agent. For example, suitable nucleating and/or clarifying agents include, but are not limited to, salts of aliphatic monocarboxylic or dicarboxylic acids, examples being alkali metal or alkaline earth metal salts of succinic acid, glutaric acid, caproic acid, acrylic acid ionomers; benzene-trisamide derivatives such as 1,3,5-benzenetrisamide, N,N,N-tris-tert-butyl-1,3,5-benzenetricarboxamide, N,N,N-tris-cyclohexyl-1,3,5-benzenetricarboxamide, N,N,N-n-butyl-1,3,5-benzene-tricarboxamide, N,N,N-tris-isopropyl-1,3,5-benzenetricarboxamide, and the like; dibenzylidene sorbitol derivatives; nonitol derivatives, unsubstituted or alkyl-substituted; sugar alcohols of allose, altrose, fructose, galactose, glucose, gulose, idose, mannose, sorbose, talose, tagatose, arabinose, ribose, ribulose, xylose, xylulose, lyxose, erthose, sorbitol and xylitol; and mixtures thereof. Other nucleating agents also suitable for use in the adhesive compositions of the present invention are inorganic salts and small-particle sized minerals such as clay, talc, silica, graphite, mica and kaolin. Examples of other suitable nucleating agents are inorganic salts such as metal hydroxides, ammonium chloride, boron nitride, sodium benzoate, lithium benzoate or some polymers such as polylactic acid, polyvinylcyclohexane, phosphorous-substituted polyolefins, polyoxymethylene, polyamides, crosslinked polyoxymethylene, polyphenylene sulfide, polyglycolic acid, polyphthalamides. Phosphoric acid aromatic ester metal salts can also be used as suitable nucleating agent. Examples of phosphoric acid aromatic ester metal salts can include lithium bis(4-t-butylphenyl)phosphate, sodium bis(4-t-butylphenyl)phosphate, lithium bis(4-cumylphenyl)phosphate, sodium bis(4-cumylphenyl)phosphate, potassium bis(4-t-butylphenyl)phosphate, calcium mono(4-t-butylphenyl)phosphate, calcium bis(4-t-butylphenyl)phosphate, magnesium mono(4-t-butylphenyl)phosphate, magnesium bis(4-t-butylphenyl)phosphate, zinc mono(4-t-butylphenyl)phosphate, zinc bis(4-t-butylphenyl)phosphate, aluminum dihydroxy-(4-t-butylphenyl)phosphate, aluminum hydroxy-bis(4-t-butylphenyl)phosphate, aluminum tris(4-t-butylphenyl)phosphate, sodium 2,2'-methylene-bis(4,6-di-t-butylphenyl)phosphate, sodium 2,2'-ethylidene-bis(4,6-di-t-butylphenyl)phosphate, sodium 2,2'-methylene-bis(4-cumyl-6-t-butylphenyl)phosphate, lithium 2,2'-methylene-bis(4,6-di-t-butylphenyl)phosphate, lithium 2,2'-ethylidene-bis(4,6-di-t-buthylphenyl)phosphate, lithium 2,2'-methylene-bis(4-cumyl-6-t-butylphenyl)phosphate, sodium 2,2'-ethylidene-bis(4-i-propyl-6-t-butylphenyl)phosphate, lithium 2,2'-methylene-bis(4-methyl-6-t-butylphenyl)phosphate, lithium 2,2'-methylene-bis(4-ethyl-6-t-butylphenyl)phosphate, sodium 2,2'-butylidene-bis(4,6-dimethylphenyl)phosphate, sodium 2,2'-butylidene-bis(4,6-di-t-butylphenyl)phosphate, sodium 2,2'-t-octylmethylene-bis(4,6-di-methylphenyl)phosphate, sodium 2,2'-t-octylmethylene-bis(4,6-di-t-butylphenyl)phosphate, sodium 2,2'-methylene-bis(4-methyl-6-t-butylphenyl)phosphate, sodium 2,2'-methylene-bis(4-ethyl-6-t-butylphenyl)phosphate, sodium (4,4'-dimethyl-6,6'-di-t-butyl-2,2'-biphenyl)phosphate, sodium 2,2'-ethylidene-bis(4-s-butyl-6-t-butylphenyl)phosphate, sodium 2,2'-methylene-bis(4,6-dimethylphenyl)phosphate, sodium 2,2'-methylene-bis(4,6-diethylphenyl)phosphate, potassium 2,2'-ethylidene-bis(4,6-di-t-butylphenyl)phosphate, calcium bis(2,2'-methylene-bis(4,6-di-t-butylphenyl)phosphate, magnesium bis[2,2'-methylene-bis(4,6-di-t-butylphenyl)phosphate], zinc bis[2,2'-methylene-bis(4,6-di-t-butylphenyl)phosphate], aluminum tris[2,2'-methylene-bis(4,6-di-t-butylphenyl)phosphate], calcium bis[2,2'-methylene-bis(4-methyl-6-t-butylphenyl)phosphate], calcium bis[2,2'-ethylidene-bis(4,6-di-t-butylphenyl)phosphate], calcium bis[2,2'-thiobis(4-methyl-6-t-butylphenyl)phosphate], calcium bis[2,2'-thiobis(4-ethyl-6-t-butylphenyl)phosphate, calcium bis[2,2'-thiobis(4,6-di-t-butylphenyl)phosphate], magnesium bis[2,2'-thiobis(4,6-di-t-butylphenyl)phosphate], magnesium bis[2,2'-thiobis(4-t-octylphenyl)phosphate], barium bis[2,2'-methylene-bis(4,6-di-t-butylphenyl)phosphate, calcium bis[(4,4'-dimethyl-6,6'-di-t-butyl-2,2'-biphenyl)phosphate], magnesium bis[2,2'-ethylidene-bis(4,6-di-t-butylphenyl)phosphate], barium bis[2,2'-ethylidene-bis(4,6-di-t-butylphenyl)phosphate], aluminum tris[2,2'-ethylidene-bis(4,6-di-t-butylphenyl)phosphate], aluminum dihydroxy-2,2'-methylene-bis(4,6-di-t-butylphenyl)phosphate, aluminum dihydroxy-2,2'-methylene-bis(4-cumyl-6-t-butylphenyl)phosphate, aluminum hydroxy-bis[2,2'-methylene-bis(4,6-di-t-butylphenyl)phosphate], aluminum hydroxy-bis[2,2'-methylene-bis(4-cumyl-6-t-butylphenyl)phosphate], titanium dihydroxy-bis[2,2'-methylene-bis(4,6-di-t-butylphenyl)phosphate], tin dihydroxy-bis[2,2'-methylene-bis(4,6-di-t-butylphenyl)phosphate], zirconium oxy-bis[2,2'-methylene-bis(4,6-di-t-butylphenyl)phosphate, aluminum dihydroxy-2,2'-methylene-bis(4-methyl-6-t-butylphenyl)phosphate, aluminum hydroxy-bis[2,2'-methylene-bis(4-methyl-6-t-butylphenyl)phosphate], aluminum dihydroxy-2,2'-ethylidene-bis(4,6-di-t-butylphenyl)phosphate, aluminum hydroxy-bis[2,2'-ethylidene-bis(4,6-di-t-butylphenyl)phosphate] or the like.

Particularly preferred nucleating agents are dibenzylidene sorbitol derivatives, such as 1,3:2,4-dibenzylidene sorbitol, 1,2,3,4-di-para-methylbenzylidene sorbitol, 1,2,3,4-di-meta, para-methylbenzylidene sorbitol, bis(4-propylbenzylidene) propyl sorbitol, 1,3:2,4-(4-methyldibenzylidene) sorbitol, bis(3,4-dimethylbenzylidene) sorbitol, 1,3-benzylidene-2,4-p-methylbenzylidenesorbitol, 1,3-benzylidene-2,4-p-ethylbenzylidenesorbitol, 1,3-p-methylbenzylidene-2,4-benzylidenesorbitol, 1,3-p-ethylbenzylidene-2,4-benzylidenesorbitol, 1,3-p-methylbenzylidene-2,4-p-ethylbenzylidenesorbitol, 1,3-p-ethylbenzylidene-2,4-p-methylbenzylidenesorbitol, 1,3,2,4-bis(p-ethylbenzylidene)sorbitol, 1,3,2,4-bis(p-n-propylbenzylidene)sorbitol, 1,3,2,4-bis(p-i-propylbenzylidene)sorbitol, 1,3,2,4-bis(p-n-butylbenzylidene)sorbitol, 1,3,2,4-bis(p-s-butylbenzylidene)sorbitol, 1,3,2,4-bis(p-t-butylbenzylidene)sorbitol, 1,3-(2',4'-dimethylbenzylidene)-2,4-benzylidenesorbitol, 1,3-benzylidene-2,4-(2',4'-dimethylbenzylidene)sorbitol, 1,3,2,4-bis(2',4'-dimethylbenzylidene)sorbitol, 1,3,2,4-bis(3',4'-dimethylbenzylidene)sorbitol, 1,3,2,4-bis(p-methoxybenzylidene)sorbitol, 1,3,2,4-bis(p-ethoxybenzylidene)sorbitol, 1,3-benzylidene-2,4-p-chlorobenzylidenesorbitol, 1,3-p-chlorobenzylidene-2,4-benzylidenesorbitol, 1,3-p-chlorobenzylidene-2,4-p-methylbenzylidenesorbitol, 1,3-p-chlorobenzylidene-2,4-p-ethylbenzylidenesorbitol, 1,3-p-methylbenzylidene-2,4-p-chlorobenzylidenesorbitol, 1,3-p-ethylbenzylidene-2,4-p-chlorobenzylidenesorbitol, 1,3,2,4-bis(p-chloro-benzylidene)sorbitol and mixtures thereof.

Another particularly preferred nucleating agents are bicyclo carboxylicacid derivatives, such as bicyclo [2.2.1] and [2.2.2]diacids, bicyclo[2.2.1]heptane dicarboxylic acid derivatives (e.g. disodium salt of bicyclo[2.2.1]heptane-2,3-dicarboxylic acid), bicyclo[2.2.2]octane derivatives; hexahydrophthalic acid derivatives such as mineral (e.g. sodium and calcium) salts; amides of aliphatic polycarboxylic acid such as 1,2,3-propanetricarboxylic acid and 1,2,3,4-butanetetracarboxylic acid; and mixtures thereof.

Nonitol derivatives such as 1,2,3-trideoxy-4,6:5,7-bis-O-[(4-propylphenyl)methylene]-nonitol are also preferred nucleating agents.

Nucleating agents based on dicarboxylic acid salts such as disodium bicycle [2.2.1] heptane-2,3-dicarboxylate and calcium hexahydrophthalic acid are also preferred.

In accordance with a particularly preferred embodiment, the nucleating agents are selected from dibenzylidene sorbitol derivatives, nonitol derivatives and dicarboxylic acid salts. Being particularly preferred 1,3:2,4-dibenzylidene sorbitol, 1,2,3,4-di-para-methylbenzylidene sorbitol, 1,2,3,4-di-meta, para-methylbenzylidene sorbitol, bis(4-propylbenzylidene) propyl sorbitol, 1,3:2,4-(4-methyldibenzylidene) sorbitol, bis(3,4-dimethylbenzylidene) sorbitol, 1,2,3-trideoxy-4,6:5,7-bis-O-[(4-propylphenyl)methylene]-nonitol, disodium bicycle [2.2.1] heptane-2,3-dicarboxylate, calcium hexahydrophthalic acid and mixtures thereof.

In accordance with a particular embodiment, the amount of the nucleator or a mixture of nucleators in the adhesive composition is comprised from 0.05 to 1.5 weight percent, preferably from 0.10 to 1.0 weight percent, more preferably from 0.12 to 0.6 weight percent, even more preferably from 0.15 to 0.5 weight percent, being particularly preferred from 0.16 to 0.4 weight percent, based on the total weight of the composition.

In addition to the above mentioned components a), b), c) and d) the adhesive compositions of the invention may additionally comprise other commonly used components, including UV inhibitors, antioxidants, inpact modifiers, flame retardants, antiestatic agents, processing aids, colorants, pigments, light stabilizers, clays, thermal stabilizers, and any other additives known to those skilled in the art.

It has been found that the adhesive compositions disclosed herein provide stronger bonding to different substrates, particularly to polyolefin substrates; metal substrates, including metal oxides and alloys; barrier resin layers, including ethylene-vinyl alcohol and polyamides; and epoxy resins.

Suitable metals include alkali metals, alkaline metals, transition metals, post transition metal elements. Particularly preferred metals include aluminium, tin, zinc, nickel, copper, platinum, gold, silver, palladium, chromium, cobalt, steel or iron and mixtures thereof. Additional preferred alloys include brass, bronze, and steel. Metals disclosed herein can be included with non-metal compounds to form a composite.

Multi-layer barrier articles according to the present invention are those comprising at least one layer comprising the adhesive composition as disclosed herein and at least on barrier resin layer. Preferably the at least one barrier resin layer is selected from ethylene-vinyl alcohol (EVOH), polyamides, polyethyelene terephthalate (PET), polyvinyl alcohol (PVOH).

In accordance with a particular embodiment, the multi-layer barrier article further comprises at least one polyolefin resin layer selected from polypropylene, low-density polyethylene (LDPE), linear low-density polyethylene (LLDPE), high-density polyethylene (HDPE), EVA, ethylene-acrylic acid copolymers, ethylene-methacrylic acid copolymers, ethylene-acrylic acid ester copolymers, ethylene-methacrylic acid ester copolymers and ionomers, and the tie-layer comprising the adhesive composition as defined herein is disposed between the said polyolefin layer and the barrier resin layer.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Furthermore, the present invention covers all possible combinations of particular and preferred embodiments described herein.

### EXAMPLES

The following terms apply for the below examples.

**PP1** is an ethylene-propylene random copolymer (3.65%wt. Et) with a high molecular weight, characterized by a melt flow rate (230 °C, 2.16 Kg; ISO 1133) of 0.3 g/ 10 min, and density of 905Kg/m³ (ISO1183).

**PP1-g-MAH_1** is the PP1 copolymer grafted with maleic anhydride having a MFI of 3.71 (230 °C, 2.16 Kg, ISO 1133) and a content of MAH of 0.152 %wt

**PP1-g-MAH_2** is the PP1 copolymer grafted with maleic anhydride having a MFI of 4.47(230 °C, 2.16 Kg, ISO 1133) and a content of MAH of 0.26 %wt.

**PP1-g-MAH**_**3** is the PP1 copolymer grafted with maleic anhydride having a MFI 5.96 (230 °C, 2.16 Kg, ISO 1133) and a content of MAH of 0.24% wt.

**PP2** is a medium melt flow rate propylene-ethylene random copolymer (3.8%wt. Et), characterized by a melt flow rate (230 °C, 2.16 Kg, ISO 1133) of 3 g/10 min, and density of 905 Kg/m³ (ISO1183).

**PP2-g-MAH** is the PP2 copolymer grafted with maleic anhydride having a MFI of 11.7(230 °C, 2.16 Kg, ISO 1133) and a content of MAH of 0.264% wt.

**PB1** is a high melt viscosity propylene heterophasic copolymer (7 %wt. Et), characterized by a melt flow rate (230 °C, 2.16 Kg, ISO 1133) of 0.3 g/10 min, and density of 905 Kg/m³ (ISO1183).

**PB3** is a propylene heterophasic copolymer (9 %wt. Et), characterized by a melt flow rate (230 °C, 2.16 Kg, ISO 1133) of 1.3 g/10 min, and density of 905 Kg/m³ (ISO1183).

**PB4** is a propylene heterophasic copolymer (9 %wt. Et), characterized by a melt flow rate (230 °C, 2.16 Kg, ISO 1133) of 3.5 g/10 min, and density of 905 Kg/m³ (ISO1183).

**PB5** is a propylene heterophasic copolymer (9 %wt. Et), characterized by a melt flow rate (230 °C, 2.16 Kg, ISO 1133) of 7 g/10 min, and density of 905 Kg/m³ (ISO1183).

**PB5_4** is a propylene heterophasic copolymer, characterized by a melt flow rate (190 °C, 2.16 Kg, ISO 1133) of 7 g/10 min, and density of 905 Kg/m³ (ISO1183).

**EPR** is an ethylene - propylene elastomeric rubber produced by suspension polymerization using a Ziegler-Natta Catalyst (polypropylene content 28%wt.).It is commercialized by Versalis as Dutral CO 038.

**EBA1** is a EBA copolymer with a butyl acrylate content of 27% wt., characterized by a melt flow rate (190 °C, 2.16 Kg, ISO 1133) of 3.5 g/10 min, a density of 928 Kg/m³.

**Millad3998** is the nucleating agent 1,3:2,4-Bis(3,4-dimethylobenzylideno) sorbitol (CAS No 135861-56-2) commercially available from Milliken Co., USA.

**HPN-20E** is the nucleating agent calcium hexahydrophthalic acid (CAS No 491589-22-1) commercially available from Milliken Co., USA.

**Rikafast AC** is the nucleating agent 1,3:2,4-bis-O-(4-methylbenzylidene)-D-sorbitol (CAS No 81541-12-0) commercially available from RIKA Int., UK.

**EVAL F171 B** is an ethylene-vinyl alcohol copolymer with an ethylene content of 32 mol %, characterized by a melt flow rate (210 °C, 2.16 Kg, ISO 1133) of 3.7 g/10 min, and density of 1.19 g/cm³ (ISO1183). It is commertialized by Kuraray, USA.

**PP_04** is a medium melt flow rate polypropylene homopolymer, characterized by a melt flow rate (230 °C, 2.16 Kg, ISO 1133) of 3.0 g/10 min, and density of 905 kg/m³ (ISO1183)

**EVAL T101 B** is an ethylene-vinyl alcohol copolymer with an ethylene content of 32 mol %, characterized by a melt flow rate (210 °C, 2.16 Kg, ISO 1133) of 4.3 g/10 min., and density of 1.17 g/cm³ (ISO1183). It is commertialized by EVAL Europe NV, BE.

**Luperox 101** is 2,5-bis(tert-butylperoxy)-2,5-dimethylhexane (CAS No 78-63-7) commercially available from Sigma-Aldrich, Spain.

The MFI was measured following the method described in UNE-EN ISO1133. MAH content was measured as disclosed in Polymer 41 (2000),1989-1999. Density was measured as described in UNE-EN ISO1183. And the ethylene content in the copolymers was measured by NMR as described in Macromolecules 15 (1982), 1150-1152. Whereas adhesion strength was measured as follows: T-peel test of the adhesives was made according with ISO 11339:2010(T) by measuring the peel force of a T-shaped bonded assembly of two flexible adherends of aluminium (purity >98.5%). These adherends were pre-treated by this method: 1) Remove possible oil or grease contamination with n-heptane, 2) wash with phosphoric acid solution (10%wt.) 3) wash with distilled water and 4) dry in a vacuum oven during 4 hours at 130 °C. The polymer metal laminate structure consisted of two 0.2mm Aluminum outer layer sheets and 0.2mm adhesive sheet in between. This sandwich structure was made by using a heat press machine and a melinex® flame of 0.2 mm width with this thermal treatment: 240 °C at 200 bar during 3 minutes. Afterwards, samples were cooled down to room temperature at a rate of 10 °C/min and, then, specimens were cut out with those dimension described in international standard ISO 11339:2010 (T). Peel force were measured in a tensile-testing machine (at 100 mm/min) as the average value obtained of at least 5 specimens.

### Example 1.

### Grafting process

PP1-g-MAH_1 was produced by feeding a PP1 polymer,maleic anhydride (0.38%wt) and the radical initiator Luperox 101 (0.038%wt) to a semi-industrial twin-screw extruder Ø32mm, L/D=50, with a temperature profile ranging from 50 to 190 °C (Temperature profile: 50-180-140-140-160-220-240-220-190-190 °C), operating at a screw speed of 400 rpm, and a die temperature of 180 °C. A vacuum system was used during extrusion at the end of the screw profile, to limit the amount of free MAH before drying/homogenization/packaging. Each grafted material was homogenized and packaged in 25kg bags.

Grafted polyolefin thus obtained was entered on a twin-screw extruder where it was combined with PB1, EBA1 and Millad 3988. The extruder, ZSK25, was operated with long barrel L/D = 40, D = 25 mm. at a temperature profile of 150-180-190-195-200-210 °C, speed = 150 rpm, torque = 60 - 70 %, throughput = 13kg/h

The following adhesive composition was obtained:
62% de PP1-g-MAH_2;
22 % PB1
15.83 % EBA1;
0.17 % Millad 3988.

The adhesive composition have the following characteristics:
MFI (230°C, 2.16Kg): 5.8 g/10 min, grafted MAH 0.1 % wt..

Other adhesive compositions were prepared following the same procedure. Table 1 contains the compositions of different adhesive compositions according to the invention (i.e. with nucleating agent) and of comparative compositions (i.e. without nucleating agent).

**Table 1**

| Example | Component1 | | Component 2 | | Component3 | | Component4 | |
|---|---|---|---|---|---|---|---|---|
| | | % | | % | | % | | % |
| | | | | | | | | |
| Comp.1 | PP1-g-MAH_2 | 62 | PB1 | 22 | EBA1 | 16 | | |
| Ex.1 | PP1-g-MAH_2 | 62 | PB1 | 22 | EBA1 | 15.83 | Millad3988 | 0.17 |
| Comp.2 | PP1-g-MAH_2 | 62 | PB1 | 22 | EPR | 16 | | |
| Ex.2 | PP1-g-MAH_2 | 62 | PB1 | 22 | EPR | 15.83 | Millad3988 | 0.17 |
| | | | | | | | | |
| Comp.3 | PP1-g-MAH_3 | 62 | PB1 | 22 | EPR | 16 | | |
| Ex.3 | PP1-g-MAH_3 | 62 | PB1 | 22 | EPR | 15.83 | Millad3988 | 0.17 |
| | | | | | | | | |
| Ex.4 | PP1-g-MAH_2 | 62 | PB1 | 22 | EPR | 15.84 | HPN-20E | 0.16 |
| Ex.5 | PP1-g-MAH_2 | 62 | PB1 | 22 | EPR | 15.84 | Rikafast | 0.16 |
| | | | | | | | | |
| Ex.6 | PP1-g-MAH_2 | 62 | PB1 | 22 | EPR | 15.92 | Rikafast | 0.08 |
| Ex.7 | PP1-g-MAH_2 | 62 | PB1 | 22 | EPR | 15.50 | Rikafast | 0.50 |
| | | | | | | | | |
| Comp.4 | PP1-g-MAH_2 | 62 | PB3 | 22 | EPR | 16 | | |
| Ex.8 | PP1-g-MAH_2 | 62 | PB3 | 22 | EPR | 15.83 | Millad3988 | 0.17 |
| Ex.9 | PP1-g-MAH_4 | 62 | PB3 | 22 | EPR | 15.83 | Millad3988 | 0.17 |
| Ex.10 | PP1-g-MAH_4 | 62 | PB4 | 22 | EPR | 15.83 | Millad3988 | 0.17 |
| Ex.11 | PP1-g-MAH_4 | 62 | PB5 | 22 | EPR | 15.83 | Millad3988 | 0.17 |
| | | | | | | | | |
| Ex.12 | PP2-g-MAH | 62 | PB3 | 22 | EPR | 15.83 | Millad3988 | 0.17 |
| Ex.13 | PP2-g-MAH | 62 | PB4 | 22 | EPR | 15.83 | Millad3988 | 0.17 |
| Ex.14 | PP2-g-MAH | 62 | PB5 | 22 | EPR | 15.83 | Millad3988 | 0.17 |
| Ex.15 | PP2-g-MAH | 62 | PB3 | 22 | EBA1 | 15.83 | Millad3988 | 0.17 |
| Ex.16 | PP2-g-MAH | 62 | PB3 | 22 | EPR / EBA1 | 15.83 | Millad3988 | 0.17 |
| | | | | | | | | |
| Ex.17 | PP2-g-MAH | 62 | PB3 | 22 | EBA1 | 15.83 | Rikafast | 0.17 |
| Ex.18 | PP2-g-MAH | 56 | PB3 | 28 | EBA1 | 15.83 | Rikafast | 0.17 |
| Ex.19 | PP2-g-MAH | 50 | PB3 | 34 | EBA1 | 15.83 | Rikafast | 0.17 |
| Ex.20 | PP2-g-MAH | 50 | PB3 | 34 | EBA1 | 15.70 | Rikafast | 0.3 |

| | | | | | | | | |
|---|---|---|---|---|---|---|---|---|
| Comp. = Comparative example Ex. = Adhesive composition according to the invetion | | | | | | | | |

Table 2 contains the adhesive strength and MFI of the comparative examples and the adhesive compositions according to the invention disclosed in Table 1.

**Table 2.**

| Example. | Adhesion | MFI (230 °C, 2.16 kg) |
|---|---|---|
| | (N/cm) | g/10min |
| Comp.1 | 19.8 | 4.12 |
| Ex.1 | 49.7 | 3.49 |
| Comp.2 | 23.2 | 3.22 |
| Ex.2 | 76.2 | 3.56 |
| | | |
| Comp.3 | 14,8 | 2.55 |
| Ex.3 | 109,1 | 2.03 |
| Ex.4 | 48.4 | |
| Ex.5 | 86.8 | |
| Ex.6 | 79.2 | |
| Ex.7 | 109.2 | |
| | | |
| Comp.4 | 12.5 | 2.58 |
| Ex.8 | 82.2 | 2.45 |
| Ex.9 | 87.2 | 2.05 |
| Ex.10 | 70.9 | 3.98 |
| Ex.11 | 74.6 | 3.29 |
| | | |
| Ex.12 | 58.0 | 5.59 |
| Ex.13 | 49.1 | 6.09 |
| Ex.14 | 44.4 | 7.31 |
| Ex.15 | 32.3 | 7.77 |
| Ex.16 | 46.1 | 5.90 |
| | | |
| Ex.17 | 49.2 | 6.56 |
| Ex.18 | 46.9 | 6.58 |
| Ex.19 | 58.1 | 5.59 |
| Ex.20 | 64.9 | 4.91 |

### Example 2. Multi-layer films. Properties and coextrusion

The adhesive composition of example 1 was extruded as tie-layer with the following materials PB5_4/ EVAL F171 B and PP_04/ EVAL T101 B.

No delamination was obserbed in any of the multi-layer films during extrusion process. Global and specific migration of MAH showed that the adhesive composition is suitable for alimentary contact.

The multi-layer film was thermoformed and no delamination was observed.

Finally, the multi-layer film was sterilized and no loss properties were observed.

### REFERENCES CITED IN THE APPLICATION

- 1.: WO2007/030172
- 2.: WO2012/068576
- 3.: US4727120
- 4.: EP603906
- 5.: UNE-EN ISO1133
- 6.: Polymer 41 (2000),1989-1999
- 7.: UNE-EN ISO1183
- 8.: Macromolecules 15 (1982), 1150-1152
- 9.: ISO11339-10-T

## Claims

1. A composition comprising:
a) from 45 to 90 weight percent, based on the total weight of the composition, of a modified polypropylene homo- or copolymer, grafted with between 0.05 to 2 weight percent, based on the total weight of the grafted polypropylene, of a unsatured carboxylic acid, a carboxylic acid derivative, or mixtures thereof;
b) from 5 to 35 weight percent, based on the total weight of the composition, of a polypropylene homo- or copolymer;
c) from 3 to 40 weight percent, based on the total weight of the composition, of an ethylene copolymer based component selected from
i) a random copolymer of ethylene with one or more polar monomers, and
ii) an ethylene-based elastomeric compound; and
d) from 0.05 to 1.5 weight percent, based on the total weight of the composition, of at least one nucleator;
the sum of the percentages of all the components of the composition being equal to 100% w/w.

2. The composition according to claim 1, wherein the component a) is a modified polypropylene random or block copolymer, grafted with between 0.05 to 2 weight percent, based on the total weight of grafted polypropylene, of a carboxylic acid, a carboxylic acid derivative, or mixtures thereof.

3. The composition according to any one of claims 1-2, comprising
a) from 45 to 80 weight percent, based on the total weight of the composition, of a modified random polypropylene copolymer, comprising from 0.5 to 7 weight percent of ethylene, grafted with between 0.1 to 1.8 weight percent of a unsaturated carboxylic acid, a carboxylic acid derivative, or mixtures thereof;
b) from15 to 30 weight percent of the polypropylene homo- or copolymer;
c) from 10 to 25 weight percent of the ethylene copolymer based component; and
d) from 0.10 to 1.0 weight percent of the at least one nucleator;
the sum of the percentages of all the components of the composition being equal to 100% w/w.

4. The composition according to any one of claims 1-3, comprising
a) from 50 to 75 weight percent, based on the total weight of the composition, of a modified random polypropylene copolymer, comprising between 2 to 5 % of ethylene, grafted with between 0.15 to 1.5 weight percent, based on the total weight of grafted polypropylene, of a unsatured carboxylic acid, a carboxylic acid derivative or mixtures thereof;
b) from 20 to 29 weight percent, based on the total weight of the composition, of the polypropylene homo- or copolymer;
c) from 12 to 18 weight percent, based on the total weight of the composition, of the ethylene copolymer based component; and
d) from 0.12 to 0.6 weight percent, based on the total weight of the composition, of the at least one nucleator;
the sum of the percentages of all the components of the composition being equal to 100% w/w.

5. The composition according to any one of claims 1-4, comprising
a) from 45 to 80 weight percent, based on the total weight of the composition, of a modified polypropylene block copolymer, comprising between 0.3 to 15 weight percent of ethylene, based on the total weight of grafted polypropylene; grafted with between 0.1 to 1.8 weight percent, based on the total weight of grafted polypropylene, of a carboxylic acid, a carboxylic acid derivative, or mixtures thereof;
b) from 15 to 30 weight percent, based on the total weight of the composition, of the polypropylene homo- or copolymer;
c) from 10 to 25 weight percent, based on the total weight of the composition, of an ethylene copolymer based component selected from
i) a random copolymer of ethylene with one or more polar monomers, and
ii) an ethylene-based elastomeric compound; and
d) from 0.10 to 1.0 weight percent, based on the total weight of the composition, of the at least one nucleator;
the sum of the percentages of all the components of the composition being equal to 100% w/w.

6. The composition according to any one of claims 1-5,having an adhesive strength comprised from 30 and 150 N/cm as measured by a T-peel test according with ISO 11339:2010(T) by measuring the peel force of a T-shaped bonded assembly of two flexible adherends of aluminium; and having a IF, as measured according to UNE-EN ISO 1133 at 230 °C/2.16 kg, comprised from 0.5 g/10 min. to 12 g/10 min.

7. The composition according to any one of claims 1-6, wherein the nucleator is selected from the group consisting of salts of aliphatic monocarboxylic or dicarboxylic acids; amides of aliphatic polycarboxylic acids; benzene-trisamide derivatives; alkyldibenzyliden sorbitol derivatives; nonitol derivatives; sugar alcohols of allose, altrose, fructose, galactose, glucose, gulose, idose, mannose, sorbose, talose, tagatose, arabinose, ribose, ribulose, xylose, xylulose, lyxose, erthose, sorbitol and xylitol; clay; talc; silica; graphite; mica; kaolin; metal hydroxides;ammonium chloride; boron nitride; sodium benzoate; lithium benzoate; polylactic acid; polyvinylcyclohexane; phosphorous-substituted polyolefins; polyoxymethylene; polyamides; crosslinked polyoxymethylene; polyphenylene sulfide; polyglycolic acid; polyphthalamides; and mixtures thereof.

8. The composition according to any one of claims 1-7, wherein the nucleator is selected from the group consisting of alkyldibenzyliden sorbitol derivatives, nonitol derivatives, dicarboxylic acid salts, and mixtures thereof; preferably the nucleator is selected from the group consisting of 1,3:2,4-dibenzylidene sorbitol, 1,2,3,4-di-para-methylbenzylidene sorbitol, 1,2,3,4-di-meta, para-methylbenzylidene sorbitol, bis(4-propylbenzylidene) propyl sorbitol, 1,3:2,4-(4-methyldibenzylidene) sorbitol, bis(3,4-dimethylbenzylidene) sorbitol, 1,2,3-trideoxy-4,6:5,7-bis-O-[(4-propylphenyl)methylene]-nonitol, disodium bicycle [2.2.1] heptane-2,3-dicarboxylate, calcium hexahydrophthalic acid, and mixtures thereof.

9. The composition according to any one of claims 1-8, wherein the unsatured carboxylic acid or carboxylic acid derivative is selected from acrylic acid, methacrylic acid, maleic acid, fumaric acid, 4-methyl cyclohex-4-ene-1,2-dicarboxylic acid, bicyclo(2.2.2)oct-5-ene-2,3-dicarboxylic acid, bicyclo(2.2.1)oct-5-ene-2,3-dicarboxylic acid, tetrahydrophthalic acid, methylbicyclo(2.2.1) hept-5-ene-2,3-dicarboxylic acid, itraconic acid,
citraconic acid, manomethyl maleate, dimethyl maleate, glycidyl maleate, butenoic acid, isobitenic acid, hexenic acid, sorbic acid, their acid halide, amide, imide, acid anhydrides and ester derivatives, and mixtures thereof.

10. The composition according to any one of claims 1-9 wherein the unsatured carboxylic acid or carboxylic acid derivative is selected from acrylic acid, methacrylic acid, maleic acid, fumaric acid, maleic anhydride, 4-methyl cyclohex-4-ene-1,2-dicarboxylic acid or anhydride, bicyclo(2.2.2)oct-5-ene-2,3-dicarboxylic acid or anhydride, bicyclo(2.2.1)oct-5-ene-2,3-dicarboxylic acid or anhydride, tetrahydrophthalic acid or anhydride, methylbicyclo(2.2.1) hept-5-ene-2,3-dicarboxylic acid or anhydride, itaconic acid and anhidride, butenoic acid, isobitenic acid, hexenic acid, sorbic acid, and mixtures thereof.

11. The composition according to any one of claims 1-10 wherein the ethylene copolymer based component c) is selected from:
i) a random copolymer of ethylene with one or more polar monomers selected from ethylene-(C₂-C₅)alkylacrylates, ethylene-(C₂-C₅)alkyl methacrylate and ethylenevinylacetates;
ii) an ethylene-based elastomeric compound selected from ethylene-propylene rubber, ethylene-propylene-diene monomer rubber and styrene-ethylene-butylene-styrene block copolymer.

12. The composition according to any one of claims 1-11 wherein the ethylene copolymer based component c) is selected from ethylenevinylacetate, ethylenemethylacrylate, ethylenemethylmethacrylate, ethylenepropylacrylate, ethylenebutylacrylate, ethylene-propylene rubber, and ethylene-propylene-diene monomer rubber.

13. A multi-layer barrier article comprising:
i) at least one barrier resin layer; and
ii) at least one tie-layer adhesively bonded to the first layer, the at least one tie-layer comprising the adhesive composition as defined in anyone of claims 1 to 12.

14. A multi-layer structure comprising:
a. a metal substrate;
b. the adhesive composition as defined in anyone of claims 1 to 12.

15. Use of the composition as defined in any of claims 1-12 as adhesive.

## Patentansprüche

1. Eine Zusammensetzung umfassend:
a) von 45 Gew.-% bis 90 Gew.-%, bezogen auf das gesamte Gewicht der Zusammensetzung, von einem modifizierten Polypropylen-Homopolymer oder Polypropylen-Copolymer, gepfroft mit zwischen 0,05 bis 2 Gew.-%, bezogen auf das gesamte Gewicht des gepfroften Polypropylens, von einer ungesättigten Carbonsäure, einem Carbonsäurederivat, oder Mischungen davon;
b) von 5 bis 35 Gew.-%, bezogen auf das gesamte Gewicht der Zusammensetzung, von einem Polypropylen-Homopolymer bzw. Polypropylen-Copolymer;
c) von 3 bis 40 Gew.-%, bezogen auf das gesamte Gewicht der Zusammensetzung, von einem auf Ethylencopolymer basierenderen Bestandteil, der ausgewählt ist aus
i) einem statistischen Copolymer aus Ethylen mit einem oder mehreren polaren Monomeren, und
ii) einer elastomeren auf Ethylen basierenden Verbindung; und
d) von 0,05 bis 1,5 Gew.-%, bezogen auf das gesamte Gewicht der Zusammensetzung, von mindestens einem Nukleationskeim;
wobei die Summe der Prozentanteile von allen Bestandteilen der Zusammensetzung 100 Gew.-% beträgt.

2. Die Zusammensetzung nach Anspruch 1, wobei der Bestandteil a) ein modifiziertes statistisches Polypropylencopolymer bzw. Polypropylen-Blockcopolymer, gepfroft mit zwischen 0,05 bis 2 Gew.-%, bezogen auf das gesamte Gewicht von gepfroftem Polypropylen, von einer Carbonsäure, einem Carbonsäurederivat, oder Mischungen davon ist.

3. Die Zusammensetzung nach einem der Ansprüche 1 - 2 umfassend
a) von 45 Gew.-% bis 80 Gew.-%, bezogen auf das gesamte Gewicht der Zusammensetzung, von einem modifizierten statistischen Polypropylen-Copolymer, umfassend von 0,5 bis 7 Gew.-% Ethylen, gepfroft mit zwischen 0,1 bis 1,8 Gew.-% von einer ungesättigten Carbonsäure, einem Carbonsäurederivat, oder Mischungen davon;
b) von 15 bis 30 Gew.-% vom Polypropylen-Homopolymer bzw. Polypropylen-Copolymer;
c) von 10 bis 25 Gew.-% von dem auf Ethylencopolymer basierenden Bestandteil; und
d) von 0,10 bis 1,0 Gew.-%, von dem mindestens einen Nukleationskeim;
wobei die Summe der Prozentanteile von allen Bestandteilen der Zusammensetzung 100 Gew.-% beträgt.

4. Die Zusammensetzung nach einem der Ansprüche 1 - 3 umfassend
a) von 50 Gew.-% bis 75 Gew.-%, bezogen auf das gesamte Gewicht der Zusammensetzung, von einem modifizierten statistischen Polypropylen-Copolymer, umfassend zwischen 2 bis 5 Gew.-% Ethylen, gepfroft mit zwischen 0,15 bis 1,5 Gew.-%, bezogen auf das gesamte Gewicht des gepfroften Polypropylens, von einer ungesättigten Carbonsäure, einem Carbonsäurederivat oder Mischungen davon;
b) von 20 bis 29 Gew.-%, bezogen auf das gesamte Gewicht der Zusammensetzung, vom Polypropylen-Homopolymer bzw. Polypropylen-Copolymer;
c) von 12 bis 18 Gew.-%, bezogen auf das gesamte Gewicht der Zusammensetzung, von dem auf Ethylencopolymer basierenderen Bestandteil; und
d) von 0,12 bis 0,6 Gew.-%, bezogen auf das gesamte Gewicht der Zusammensetzung, von dem mindestens einen Nukleationskeim;
wobei die Summe der Prozentanteile von allen Bestandteilen der Zusammensetzung 100 Gew.-% beträgt.

5. Die Zusammensetzung nach einem der Ansprüche 1 - 4 umfassend
a) von 45 Gew.-% bis 80 Gew.-%, bezogen auf das gesamte Gewicht der Zusammensetzung, von einem modifizierten Polypropylen-Blockcopolymer, umfassend zwischen 0,3 bis 15 Gew.-% Ethylen, bezogen auf das gesamte Gewicht von gepfroftem Polypropylen; gepfroft mit zwischen 0,1 bis 1,8 Gew.-%, bezogen auf das gesamte Gewicht des gepfroften Polypropylens, von einer ungesättigten Carbonsäure, einem Carbonsäurederivat, oder Mischungen davon;
b) von 15 bis 30 Gew.-%, bezogen auf das gesamte Gewicht der Zusammensetzung, vom Polypropylen-Homopolymer bzw. Polypropylen-Copolymer;
c) von 10 bis 25 Gew.-%, bezogen auf das gesamte Gewicht der Zusammensetzung, von einem auf Ethylencopolymer basierenderen Bestandteil, der ausgewählt ist aus
i) einem statistischen Copolymer aus Ethylen mit einem oder mehreren polaren Monomeren, und
ii) einer elastomeren auf Ethylen basierenden Verbindung; und
d) von 0,10 bis 1,0 Gew.-%, bezogen auf das gesamte Gewicht der Zusammensetzung, von dem mindestens einen Nukleationskeim;
wobei die Summe der Prozentanteile von allen Bestandteilen der Zusammensetzung 100 Gew.-% beträgt.

6. Die Zusammensetzung nach einem der Ansprüche 1-5, die eine Klebkraft hat, die von 30 und 150 N/cm reicht, gemessen durch einen T-Schälfestigkeitstest nach ISO 11339:2010(T), indem die Schälfestigkeit von einer T-förmigen gebundenen Anordnung von zwei flexiblen Klebeflächen aus Aluminium gemessen wird; und die einen IF, gemessen nach UNE-EN ISO 1133 bei 230 °C/2,16 kg hat, der von 0,5 g/10 min bis 12 g/10 min reicht.

7. Die Zusammensetzung nach einem der Ansprüche 1-6, wobei der Nukleationskeim ausgewählt ist aus der Gruppe bestehend aus Salzen von aliphatischen Monocarbon- oder Dicarbonsäuren; Amiden aus aliphatischen Polycarbonsäuren; Benzoltrisamidderivaten; Alkyldibenzylidensorbitolderivaten; Nonitolderivaten; Zukeralkoholen aus Allose, Altrose, Fruktose, Galaktose, Glukose, Gulose, Idose, Mannose, Sorbose, Talose, Tagatose, Arabinose, Ribose, Ribulose, Xylose, Xylulose, Lyxose, Erthose, Sorbitol und Xylitol; Tonerde; Talk; Siliciumdioxid; Graphit; Glimmer; Kaolin; Metallhydroxiden; Ammoniumchlorid; Bornitrid; Natriumbenzoat; Lithiumbenzoat; Polymilchsäure; Polyvinylcyclohexan; phosphorsubstituierten Polyolefinen; Polyoxymethylen; Polyamiden; vernetztem Polyoxymethylen; Polyphenylensulfid; Polyglykolsäure; Polyphthalamiden; und Mischungen davon.

8. Die Zusammensetzung nach einem der Ansprüche 1-7, wobei der Nukleationskeim ausgewählt ist aus der Gruppe bestehend aus Alkyldibenzylidensorbitolderivaten, Nonitolderivaten, Salzen aus Dicarbonsäuren, und Mischungen davon; vorzugsweise der Nukleationskeim ist ausgewählt aus der Gruppe bestehend aus 1,3:2,4-Dibenzylidensorbitol, 1,2,3,4-Di-para-methylbenzylidensorbitol, 1,2,3,4-Di-meta, para-Methylbenzylidensorbitol, Bis(4-propylbenzyliden)propylsorbitol, 1,3:2,4-(4-Methyldibenzyliden)sorbitol, Bis(3,4-dimethylbenzyliden)sorbitol, 1,2,3-Trideoxy-4,6:5,7-bis-O-[(4-propylphenyl)methylen]-nonitol, Disodium-Bicyclo [2.2.1] heptan-2,3-dicarboxylat, Calcium-Hexahydrophthalsäure, und Mischungen davon.

9. Die Zusammensetzung nach einem der Ansprüche 1-8, wobei die ungesättigte Carbonsäure bzw. Carbonsäurederivat ausgewählt ist aus Acrylsäure, Methacrylsäure, Maleinsäure, Fumarsäure, 4-Methylcyclohex-4-en-1,2-dicarbonsäure, Bicyclo(2.2.2)oct-5-en-2,3-dicarbonsäure, Bicyclo(2.2.1)oct-5-en-2,3-dicarbonsäure, Tetrahydrophthalsäure, Methylbicyclo(2.2.1) hept-5-en-2,3-dicarbonsäure, Itraconsäure, Citraconsäure, Monomethylmaleat, Dimethylmaleat, Glycidylmaleat, Butensäure, Isobitensäure, Hexensäure, Sorbinsäure, deren säuren Halid, Amid, Imid, säuren Anhydriden und Esterderivativen, und Mischungen davon.

10. Die Zusammensetzung nach einem der Ansprüche 1-9, wobei die ungesättigte Carbonsäure bzw. Carbonsäurederivat ausgewählt ist aus Acrylsäure, Methacrylsäure, Maleinsäure, Fumarsäure, Maleinanhydrid, 4-Methylcyclohex-4-en-1,2-dicarbonsäure oder deren Anhydrid, Bicyclo(2.2.2)oct-5-en-2,3-dicarbonsäure oder deren Anhydrid, Bicyclo(2.2.1)oct-5-en-2,3-dicarbonsäure oder deren Anhydrid, Tetrahydrophthalsäure oder deren Anhydrid, Methylbicyclo(2.2.1) hept-5-en-2,3-dicarbonsäure oder deren Anhydrid, Methylbicyclo(2.2.1) hept-5-en-2,3-dicarbonsäure oder deren Anhydrid, Itraconsäure und deren Anhydrid, Butensäure, Isobitensäure, Hexensäure, Sorbinsäure, und Mischungen davon.

11. Die Zusammensetzung nach einem der Ansprüche 1-10, wobei der auf Ethylencopolymer basierende Bestandteil c) ausgewählt ist aus:
i) einem statistischen Copolymer aus Ethylen mit einem oder mehreren polaren Monomeren, die aus Ethylen-(C₂-C₅)alkylacrylaten, Ethylen(C₂C₅)alkylmethacrylat und Ethylenvinylacetaten ausgewählt sind;
ii) einer auf Ethylen basierenden elastomeren Verbindung, die aus Ethylen-Propylen-Kautschuk, Ethylen-Propylen-Dien-Monomer-Kautschuk und Styren-Ethylen-Butylen-Styren-Blockcopolymer ausgewählt ist.

12. Die Zusammensetzung nach einem der Ansprüche 1-11, wobei der auf Ethylencopolymer basierende Bestandteil c) aus Ethylenvinylacetat, Ethylenmethylacrylat, Ethylenmethylmethacrylat, Ethylenpropylacrylat, Ethylenbutylacrylat, Ethylen-Propylen-Kautschuk, und Ethylen-Propylen-Dien-Monomer-Kautschuk ausgewählt ist.

13. Ein Mehrschicht-Barrieren-Artikel umfassend:
i) mindestens eine Barrierenharzschicht; und
ii) mindestens einen Haftvermittler, der mit der ersten Schicht adhäsiv verbunden ist, wobei der mindestens eine Haftvermittler die Klebstoffzusammensetzung wie in einem der Ansprüche 1 bis 12 definiert umfasst.

14. Eine Mehrschichtstruktur umfassend:
a. ein Metallsubstrat;
b. die Klebstoffzusammensetzung wie in einem der Ansprüche 1 bis 12 definiert.

15. Verwendung der Zusammensetzung wie in einem der Ansprüche 1-12 definiert als Klebstoff.

## Revendications

1. Une composition comprenant :
a) de 45 à 90 pour cent en poids, basé sur le poids total de la composition, d'un homopolymère ou copolymère de polypropylène modifié, greffé avec entre 0,05 à 2 pour cent en poids, basé sur le poids total du polypropylène greffé, d'un acide carboxylique insaturé, un dérivé d'acide carboxylique, ou des mélanges de ceux-ci ;
b) de 5 à 35 pour cent en poids, basé sur le poids total de la composition, d'un homopolymère ou copolymère de polypropylène ;
c) de 3 à 40 pour cent en poids, basé sur le poids total de la composition, d'un composant basé sur copolymère d'éthylène choisi parmi
i) un copolymère statistique d'éthylène avec un ou plusieurs monomères polaires, et
ii) un composé élastomère basé sur éthylène ;
et
d) de 0,05 à 1,5 pour cent en poids, basé sur le poids total de la composition, d'au moins un nucléateur ;
étant la somme des pourcentages de tous les composants de la composition égale à 100% en poids.

2. La composition selon la revendication 1, dans laquelle le composant a) est un copolymère statistique ou bloc de polypropylène modifié, greffé avec entre 0,05 à 2 pour cent en poids, basé sur le poids total du polypropylène greffé, d'un acide carboxylique, un dérivé d'acide carboxylique, ou des mélanges de ceux-ci.

3. La composition selon l'une quelconque des revendications 1 - 2, comprenant
a) de 45 à 80 pour cent en poids, basé sur le poids total de la composition, d'un copolymère de polypropylène statistique modifié, comprenant de 0,5 à 7 pour cent en poids d'éthylène, greffé avec entre 0,1 à 1,8 pour cent en poids d'un acide carboxylique insaturé, un dérivé d'acide carboxylique, ou des mélanges de ceux-ci ;
b) de 15 à 30 pour cent en poids de l'homopolymère ou copolymère de polypropylène ;
c) de 10 à 25 pour cent en poids du composant basé sur copolymère d'éthylène ; et
d) de 0,10 à 1,0 pour cent en poids de l'au moins un nucléateur ;
étant la somme des pourcentages de tous les composants de la composition égale à 100% en poids.

4. La composition selon l'une quelconque des revendications 1 - 3, comprenant
a) de 50 à 75 pour cent en poids, basé sur le poids total de la composition, d'un copolymère de polypropylène statistique modifié, comprenant entre 2 à 5% d'éthylène, greffé avec entre 0,15 à 1,5 pour cent en poids, basé sur le poids total de polypropylène greffé, d'un acide carboxylique insaturé, un dérivé d'acide carboxylique, ou des mélanges de ceux-ci ;
b) de 20 à 29 pour cent en poids, basé sur le poids total de la composition, de l'homopolymère ou copolymère de polypropylène ;
c) de 12 à 18 pour cent en poids, basé sur le poids total de la composition, du composant basé sur copolymère d'éthylène ; et
d) de 0,12 à 0,6 pour cent en poids, basé sur le poids total de la composition, de l'au moins un nucléateur ;
étant la somme des pourcentages de tous les composants de la composition égale à 100% en poids.

5. La composition selon l'une quelconque des revendications 1 - 4, comprenant
a) de 45 à 80 pour cent en poids, basé sur le poids total de la composition, d'un copolymère bloc de polypropylène modifié, comprenant entre 0,3 à 15 pour cent en poids d'éthylène, basé sur le poids total de polypropylène greffé ; greffé avec entre 0,1 à 1,8 pour cent en poids, basé sur le poids total de polypropylène greffé, d'un acide carboxylique, un dérivé d'acide carboxylique, ou des mélanges de ceux-ci ;
b) de 15 à 30 pour cent en poids, basé sur le poids total de la composition, de l'homopolymère ou copolymère de polypropylène ;
c) de 10 à 25 pour cent en poids, basé sur le poids total de la composition, d'un composant basé sur copolymère d'éthylène choisi parmi
i) un copolymère statistique d'éthylène avec un ou plusieurs monomères polaires, et
ii) un composé élastomère basé sur éthylène ; et
d) de 0,10 à 1,0 pour cent en poids, basé sur le poids total de la composition, de l'au moins un nucléateur ;
étant la somme des pourcentages de tous les composants de la composition égale à 100% en poids.

6. La composition selon l'une quelconque des revendications 1-5, ayant une résistance au pelage comprise de 30 et 150 N/cm mesurée moyennant un essai de pelage en T selon ISO 11339:2010(T) mesurant la force de pelage d'un assemblage collé en forme de T de deux éléments adhérents flexibles en aluminium ; et ayant un IF, mesuré selon UNE-EN ISO 1133 à 230 °C/2,16 kg, compris de 0,5 g/10 min à 12 g/10 min.

7. La composition selon l'une quelconque des revendications 1-6, dans laquelle le nucléateur est choisi dans le groupe constitué de sels d'acides monocarboxyliques ou dicarboxyliques aliphatiques ; amides d'acides polycarboxyliques aliphatiques ; dérivés de benzène-trisamide ; dérivés d'alkyldibenzylidène sorbitol ; dérivés de nonitol ; alcools de sucre d'allose, altrose, fructose, galactose, glucose, gulose, idose, mannose, sorbose, talose, tagatose, arabinose, ribose, ribulose, xylose, xylulose, lyxose, erthose, sorbitol et xylitol ; argille ; talque ; silice ; graphite; mica; kaolin ; hydroxides de métal ; chlorure d'ammonium ; nitrure de bore ; benzoate de sodium ; benzoate de lithium ; acide polylactique ; polyvinylcyclohéxane ; polyoléfines substituées par du phosphore ; polyoxyméthylène ; polyamides ; polyoxyméthylène réticulé ; sulfure de polyphénylène ; acide polyglycolique ; polyphthalamides ; et mélanges de ceux-ci.

8. La composition selon l'une quelconque des revendications 1-7, dans laquelle le nucléateur est choisi dans le groupe constitué de dérivés d'alkyldibenzylidène sorbitol, dérivés de nonitol, sels d'acide dicarboxylique, et mélanges de ceux-ci; de préférence le nucléateur est choisi dans le groupe constitué de 1,3:2,4-dibenzylidène sorbitol, 1,2,3,4-di-para-méthylbenzylidène sorbitol, 1,2,3,4-di-méta, para-méthylbenzylidène sorbitol, bis(4-propylbenzylidène)propylsorbitol, 1,3:2,4-(4-méthyldibenzylidène)sorbitol, bis(3,4-diméthylbenzylidène)sorbitol, 1,2,3-tridéoxy-4,6:5,7-bis-O-[(4-propylphényl)méthylène]-nonitol, disodium bicycle [2.2.1] heptane-2,3-dicarboxylate, acide hexahydrophthalique calcium, et des mélanges de ceux-ci.

9. La composition selon l'une quelconque des revendications 1-8, dans laquelle l'acide carboxylique insaturé ou le dérivé d'acide carboxylique est choisi parmi acide acrylique, acide méthacrylique, acide maléique, acide fumarique, acide 4-méthyl cyclohex-4-ène-1,2-dicarboxylique, acide bicyclo(2.2.2)oct-5-ène-2,3-dicarboxylique, acide bicyclo(2.2.1)oct-5-ène-2,3-dicarboxylique, acide tétrahydrophthalique, acide méthylbicyclo(2.2.1) hept-5-ène-2,3-dicarboxylique, acide itraconique, acide citraconique, maléate de monométhyle, maléate de diméthyle, maléate de glycidyle, acide buténoïque, acide isobiténique, acide hexenique, acide sorbique, leur halure acide, amide, imide, anhydrides acides et dérivés d'ester et des mélanges de ceux-ci.

10. La composition selon l'une quelconque des revendications 1-9, dans laquelle l'acide carboxylique insaturé ou le dérivé d'acide carboxylique est choisi parmi acide acrylique, acide méthacrylique, acide maléique, acide fumarique, anhydride maléique, acide ou anhydride 4-méthyl cyclohex-4-ène-1,2-dicarboxylique, acide ou anhydride bicyclo(2.2.2)oct-5-ène-2,3-dicarboxylique, acide ou anhydride bicyclo(2.2.1)oct-5-ène-2,3-dicarboxylique, acide ou anhydride tétrahydrophthalique, acide ou anhydride méthylbicyclo(2.2.1) hept-5-ène-2,3-dicarboxylique, acide ou anhydride itaconique, acide buténoïque, acide isobiténique, acide hexenique, acide sorbique, et des mélanges de ceux-ci.

11. La composition selon l'une quelconque des revendications 1 - 10, dans laquelle le composant c) basé sur copolymère d'éthylène est choisi parmi :
i) un copolymère statistique d'éthylène avec un ou plusieurs monomères polaires choisis parmi éthylène-(C₂-C₅)alkylacrylates, éthylène(C₂C₅)alkyl méthacrylate et éthylènevinylacétates ;
ii) un composé élastomère basé sur éthylène choisi parmi caoutchouc éthylène-propylène, caoutchouc éthylène-propylène-diène monomère et copolymère bloc de styrène-éthylène-butylène-styrène.

12. La composition selon l'une quelconque des revendications 1 - 11, dans laquelle le composant c) basé sur copolymère d'éthylène est choisi parmi éthylènevinylacetate, éthylèneméthylacrylate, éthylèneméthylméthacrylate, éthylènepropylacrylate, éthylènebutylacrylate, caoutchouc éthylène-propylène, et caoutchouc éthylène-propylène-diène monomère.

13. Un article de barrière multicouche comprenant :
i) au moins une couche de résine de barrière ; et
ii) au moins une couche de liaison collée à la première couche,
comprenant l'au moins une couche de liaison la composition d'adhésif telle que définie dans l'une quelconque des revendications 1 à 12.

14. Une structure multicouche comprenant :
a. un substrat de métal ;
b. la composition d'adhésif telle que définie dans l'une quelconque des revendications 1 à 12.

15. Utilisation de la composition telle que définie dans l'une quelconque des revendications 1-12 comme un adhésif.
